# EUROPÄISCHE PATENTSCHRIFT

(11) **EP 2 520 846 B1**
(45) Veröffentlichungstag und Bekanntmachung des Hinweises auf die Patenterteilung: **11.07.2018**
(21) Anmeldenummer: 12166586.3
(22) Anmeldetag: 03.05.2012
(51) Int. Cl.: F16M 13/02, F16M 11/04

(54) **Trägerelement für ein Hausgerät, Anordnung mit einem derartigen Trägerelement als auch Hausgerät mit einer entsprechenden Anordnung**
Support element for a domestic appliance, assembly with such a support element and domestic appliance with the corresponding assembly
Élément de support pour un appareil ménager, agencement comportant un élément de support de ce type et appareil ménager doté de l'agencement correspondant

(30) Priorität: 06.05.2011 ES 201130721
(43) Veröffentlichungstag der Anmeldung: 07.11.2012
(73) Patentinhaber: BSH Hausgeräte GmbH, 81739 München (DE)
(72) Erfinder: Aranda Vazquez, Sandra, 50015 Zaragoza (ES); Perez Cabeza, Pilar, 50008 Zaragoza (ES); Pina Gadea, Carmelo, 50008 Zaragoza (ES); Romera Sanjuan, Cristina, 50015 Zaragoza (ES); Torrubia Marco, Demetrio, 50003 Zaragoza (ES); Buñuel Magdalena, Miguel Angel, 50017 Zaragoza (ES); Dionisio Micolau, Diego, 50013 Zaragoza (ES); Ferrer Salillas, Alejandro Jesus, 50010 Zaragoza (ES); Garcia Herrer, Antonio José, 50018 Zaragoza (ES); Martin Gomez, Damaso, 20012 Zaragoza (ES); Martin Muñoz, Adolfo, 50018 Zaragoza (ES); Moya Albertin, Maria Elena, 50002 Zaragoza (ES); Ortiz Sainz, David, 50298 Pinseque (Zaragoza) (ES)

(56) Entgegenhaltungen:
- WO-A1-2010/052418
- US-A- 3 869 760
- US-A- 4 140 293
- US-A1- 2004 055 985
- US-A1- 2006 272 841

## Beschreibung

Die Erfindung betrifft ein Trägerelement für ein Hausgerät, welches zumindest abschnittsweise ein U-förmiges Querschnittprofil aufweist. Des Weiteren betrifft die Erfindung eine Anordnung mit einem derartigen Trägerelement als auch ein Hausgerät mit einer entsprechenden Anordnung und ein Verfahren zur Montage einer Anordnung. Insbesondere bei Hausgeräten ist es bekannt, dass Trägerelement im Bereich des Gehäuses oder im Inneren des Gehäuses angeordnet sind. Diese sind üblicherweise längliche Bauteile, die als Hohlprofil konzipiert sind. Gerade bei U-förmigen Querschnittprofilen ist es gegenwärtig äußerst schwierig und aufwendig, die Verbindung mit weiteren Bauteilen auszugestalten. Gerade dann, wenn sich in dieses U-förmige Querschnittprofil des Trägerelements ein weiteres Bauteil hineinerstreckt und eine entsprechende, mechanisch stabile Verbindung geschaffen werden soll, ist es gegenwärtig nur mit weiteren separaten Elementen, wie Schrauben, Nieten oder dergleichen möglich, eine entsprechende stabile Verbindung herzustellen. Neben einer Erhöhung der Komponentenanzahl einer derartigen Anordnung ist dabei auch der Montageaufwand sehr hoch. Gerade die Zugänglichkeit in das Innere des U-förmigen Querschnittprofils ist dabei eingeschränkt und es können somit auch nur eingeschränkte und gegebenenfalls an unzureichenden Stellen zu befestigende weitere separate Befestigungselemente verwendet werden.

Die US 2006/0272841 A1 offenbart ein nicht-metallisches und mittels Schnappbolzen verriegelbares Gehäuse.

Die WO 2010/052418 A1 offenbart ein Verfahren zum Befestigen eines Teils an einer profilierten Leiste sowie eine Zwischenbefestigungsvorrichtung hierfür.

Die US 2004/0055985 A1 offenbart ein Universalregal.

Die US 4,140,293 offenbart einen nagellosen, klammerartigen und mit Widerhaken versehenen Halter zum Befestigen einer elektrischen Steckdose.

Die US 3,869,760 offenbart einen aus einem Blechmaterial gebildeten Halteclip gemäß dem Oberbegriff des Anspruchs 1. Es ist Aufgabe der vorliegenden Erfindung, ein Trägerelement für ein Hausgerät zu schaffen, welches mit einem U-förmigen Querschnitt im Profil ausgebildet ist und eine besonders einfache und mechanisch stabile Verbindung mit einem weiteren Bauteil ermöglicht.

Entsprechend ist es auch Aufgabe eine Anordnung mit einem derartigen Trägerelement, als auch ein Hausgerät mit einer entsprechenden Anordnung zu schaffen.

Diese Aufgabe wird durch ein Trägerelement, eine Anordnung an einem Hausgerät, einem Hausgerät und ein Verfahren gemäß den unabhängigen Ansprüchen gelöst.

Ein erfindungsgemäßes Trägerelement für ein Hausgerät ist zumindest abschnittsweise mit einem U-förmigen Profil ausgebildet. In diesem U-förmigen Abschnitt ist an gegenüberliegenden Innenseiten des Trägerelements integral jeweils zumindest ein Befestigungselement zum Befestigen eines mit dem Trägerelement zu verbindenden weiteren Bauteils ausgebildet. Durch eine derartige Ausgestaltung wird also ein Trägerelement geschaffen, welches integral bereits Befestigungselemente aufweist. Durch die Anbringung an ganz spezifischer Stelle, nämlich den Innenseiten des Trägerelements und darüber hinaus auch noch jeweils zumindest ein Befestigungselement an den gegenüberliegenden Innenseiten ist eine besonderes zuverlässige und leicht zu montierende Befestigungsmöglichkeit mit einem weiteren Bauteil geschaffen. Zusätzliche Komponenten wie Schrauben oder dergleichen entfallen bei einer derartigen Ausgestaltung. Gerade ganz spezifisch geformte Trägerelemente, nämlich derartige mit einem U-förmigen Querschnittprofil, können durch eine derartige erfindungsgemäße Ausgestaltung besonders leicht mit einem anderen Bauteil, welches sich bereichsweise in das Innere des Trägerelements erstreckt, verbunden werden. Durch das Zusammenfügen selbst wird bereits automatisch die mechanisch stabil haltende Verbindung geschaffen.

Es ist vorgesehen, dass die Befestigungselemente im unverbundenen Zustand des Trägerelements mit dem Bauteil schräg von den Innenseiten abstehend orientiert sind, und zwar in die Richtung des im Querschnitt offenen Endes des Trägerelements orientiert sind. Bei einer derartigen Ausgestaltung ist dann erreicht, dass beim Einschieben eines Bauteils in das Trägerelement diese Befestigungselemente an der Ausgangsstellung bzw. Ausgangsorientierung quasi nach oben gebogen werden können und somit im verbundenen Zustand des Trägerelements mit dem Bauteil von der Innenseite abstehend und schräg nach oben und somit abgewandt von dem offenen Ende des Trägerelements orientiert sind. Während des Zusammenfügens des Trägerelements mit dem Bauteil wird diese Änderung der Orientierung der Befestigungselemente hervorgerufen, wodurch auch dann die mechanisch feste Verbindung zwischen dem Trägerelement und dem Bauteil hergestellt ist. Insbesondere sind die Befestigungselemente derart konstruiert, dass sie sich dann während dieses Zusammenfügens des Trägerelements mit dem Bauteil insbesondere an Außenseiten des Bauteils einkrallen bzw. eingraben und insbesondere wiederum widerhakenartig sich darin halten.

Vorzugsweise ist vorgesehen, dass die Befestigungselemente funktionell als Einkrallelemente ausgebildet sind. Dies bedeutet, dass sich die Befestigungselemente so an der Innenseite angeordnet befinden, dass sie im zusammengefügten Zustand mit dem weiteren Bauteil in dieses quasi einkrallen bzw. einhaken. Eine hoch belastbare und dauerhaft bestehend bleibende mechanische Verbindung ist dadurch gewährleistet.

Bei einer nicht von der Erfindung erfassten Ausführung ist vorgesehen, dass sich die Befestigungselemente im unverbundenen Zustand des Trägerelements mit dem Bauteil schräg von den Innenseiten abstehend in Richtung des im Querschnitt offenen Endes des Trägerelements orientieren und auch beim Zusammenfügen mit dem weiteren Bauteil im Wesentlichen diese Orientierung beibehalten. Ein Verbiegen nach oben hin ist bei dieser Ausgestaltung nicht vorgesehen. Hier sind dann die Befestigungselemente mechanisch so stabil und steif konzipiert, dass sie im Wesentlichen ihre Orientierungsposition beibehalten und sich beim relativen Einfügen und Verschieben des Bauteils zum Trägerelement in den Bauteil verkrallen.

Vorzugsweise sind die Befestigungselemente zumindest an ihrem vorderen Ende spitzig ausgebildet. Die oben genannte Vorteilhaftigkeit bzgl. der Verbindung mit dem Bauteil ist dadurch besonders gut erreichbar. Insbesondere das Verkrallen oder das entlang Kratzen hin zu einem mechanischen Einkrallen ist dadurch besonders präzise und mechanisch dauerhaft haltend ermöglicht.

Vorzugsweise ist vorgesehen, dass die Befestigungselemente stiftartig ausgebildet sind. Dadurch kann einerseits eine platzsparende und dennoch mechanisch sehr stabile Ausgestaltung erreicht werden.

Vorzugsweise ist vorgesehen, dass das Trägerelement aus Metall ausgebildet ist.

Des Weiteren betrifft die Erfindung eine Anordnung mit einem erfindungsgemäßen Trägerelement und einer vorteilhaften Ausgestaltung davon. Die Anordnung umfasst darüber hinaus ein weiteres separates Bauteil, welches im zusammengefügten Zustand des Trägerelements mit dem Bauteil sich zumindest teilweise in das Innere des U-förmigen Abschnitts des Trägerelements erstreckt und durch die an einer Außenseite des Bauteils eingreifenden Befestigungselemente mit dem Trägerelement positionsfixiert ist.

Vorzugsweise ist das Bauteil zumindest abschnittsweise im Querschnitt U-förmig ausgebildet. Insbesondere greift der U-förmige Abschnitt des Bauteils in den U-förmigen Abschnitt des Trägerelements ein. Gerade bei derartigen Konstruktionen kann somit im Vergleich zu bekannten Verbindungen eine mechanisch sehr stabile Verbindung geschaffen werden, ohne dass zusätzliche Elemente wie Schrauben oder dergleichen für die Verbindung erforderlich wären.

Die Befestigungselemente können insbesondere auch als Krallen oder Klammern bezeichnet werden.

Des Weiteren betrifft die Erfindung auch ein Hausgerät, beispielsweise zum Zubereiten von Lebensmitteln, wie einen Backofen, welches eine erfindungsgemäße Anordnung oder eine vorteilhafte Ausgestaltung davon aufweist. Das Hausgerät kann aber auch zur Pflege von Wäschestücken, wie einem Wäschetrockner oder einer Waschmaschine, oder zum Reinigen von Geschirr, wie einem Geschirrspüler, oder zum Konservieren von Lebensmitteln, wie einem Kühlschrank oder einer Gefriertruhe, ausgebildet sein.

Ausführungsbeispiele der Erfindung werden nachfolgend anhand schematischer Zeichnungen näher erläutert. Es zeigen:
- Fig. 1: eine schematische Schnittdarstellung durch ein Ausführungsbeispiel einer erfindungsgemäßen Anordnung im unverbundenen Zustand eines Trägerelements und eines weiteren Bauteils der Anordnung;
- Fig. 2: eine Schnittdarstellung der Anordnung gemäß Fig. 1 im verbundenen Zustand des Trägerelements mit dem Bauteil;
- Fig. 3: eine Schnittdarstellung durch ein nicht von der Erfindung erfasstes Ausführungsbeispiel einer im verbundenen Zustand gezeigten Anordnung;
- Fig. 4: eine perspektivische Darstellung eines Teilausschnitts der Anordnung gemäß Fig. 3;
- Fig. 5: eine Frontansicht eines Teilausschnitts eines nicht von der Erfindung erfassten Ausführungsbeispiels einer in zusammengesetzten Zustand gezeigten Anordnung; und
- Fig. 6: eine weitere perspektivische Darstellung eines Teilausschnitts der Ausführung gemäß Fig. 3.

In den Figuren werden gleiche oder funktionsgleiche Elemente mit den gleichen Bezugszeichen versehen.

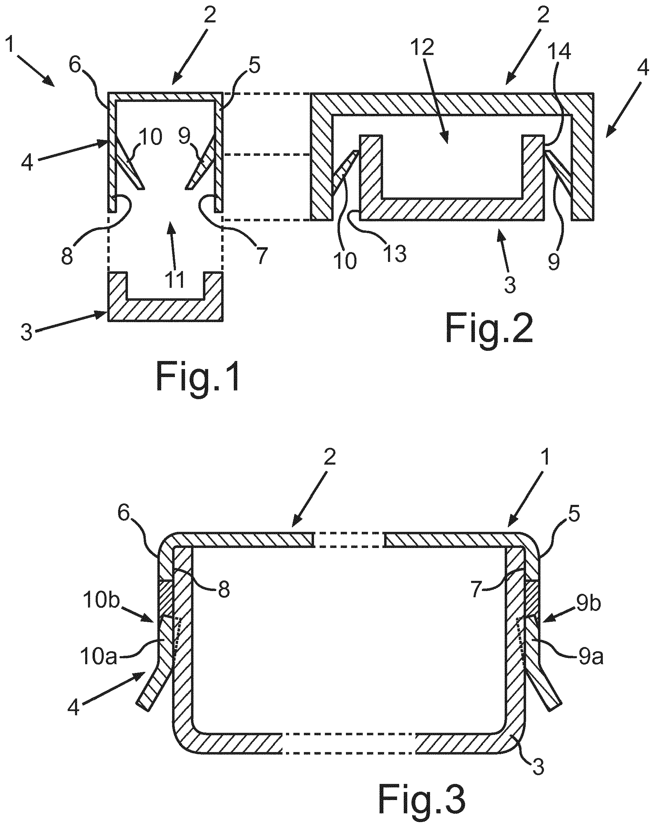

In Fig. 1 ist in einer schematischen Schnittdarstellung ein Ausführungsbeispiel einer erfindungsgemäßen Anordnung 1 gezeigt, wobei hier ein Trägerelement 2 der Anordnung 1 und ein weiteres separates Bauteil 3 der Anordnung 1 im unverbundenen Zustand gezeigt sind. Das Trägerelement 2 ist einstückig ausgebildet und im gezeigten Querschnitt zumindest abschnittsweise U-förmig gestaltet. Das U-förmige Querschnittprofil 4 weist zwei vertikale Seitenschenkel 5 und 6 auf. An deren Innenseiten 7 und 8 sind jeweils zumindest ein Befestigungselement 9 und 10 integral ausgebildet.

Die beiden Befestigungselemente 9 und 10 sind als Krallen ausgebildet und weisen spitzige vordere freie Enden auf. Die Befestigungselemente 9 und 10 können funktionell auch als Einkrallelemente oder Widerhakenelemente angesehen werden und sind im Ausgangsbeispiels stiftartig gestaltet.

Wie aus der Darstellung in Fig. 1 zu erkennen ist, sind die beiden Befestigungselemente 9 und 10 im unverbundenen Zustand mit dem Bauteil 3 schräg nach unten in Richtung eines offenen Endes 11 des Trägerelements 2 orientiert.

Darüber hinaus ist zu erkennen, dass das weitere Bauteil 3 im Querschnitt ebenfalls zumindest abschnittsweise U-förmig ausgebildet ist.

In Fig. 2 ist eine Querschnittdarstellung des verbundenen Zustands der Anordnung 1 gezeigt. Es ist zu erkennen, dass dabei das weitere Bauteil 3 mit seinem U-förmigen Abschnitt in das Innere 12 des U-förmigen Querschnittsprofils 4 des Trägerelements 2 eingebracht bzw. eingesteckt ist. Dabei ist zu erkennen, dass die Befestigungselemente 9 und 10 nunmehr im vollständig verbundenen Zustand gemäß Fig. 2 nicht mehr nach unten orientiert sind, sondern durch die im Wesentlichen vertikale Montagebewegung mit dem weiteren Bauteil 3 kontaktiert wurden und auf dem weiteren Montageweg nach oben gebogen wurden. Während dieses Montagevorgangs haben sich die vorderen freien spitzigen Enden der Befestigungselemente 9 und 10 in die Außenseiten 13 und 14 der vertikalen Schenkel des U-förmigen Abschnitts des Bauteils 3 verhakt bzw. eingrabend verkrallt. Dies erfolgt durch eine entsprechende Materialabschabung bzw. Abscherung und einem Einkratzen bzw. Einhaken der Befestigungselemente 9 und 10 an diesen Außenseiten 13 und 14.

In Fig. 3 ist in einer weiteren vereinfachten Querschnittdarstellung eine weitere, von der Erfindung nicht erfasste Anordnung 1 gezeigt. Auch hier ist ein Trägerelement 2 vorgesehen, welches einen U-förmigen Abschnitt aufweist.

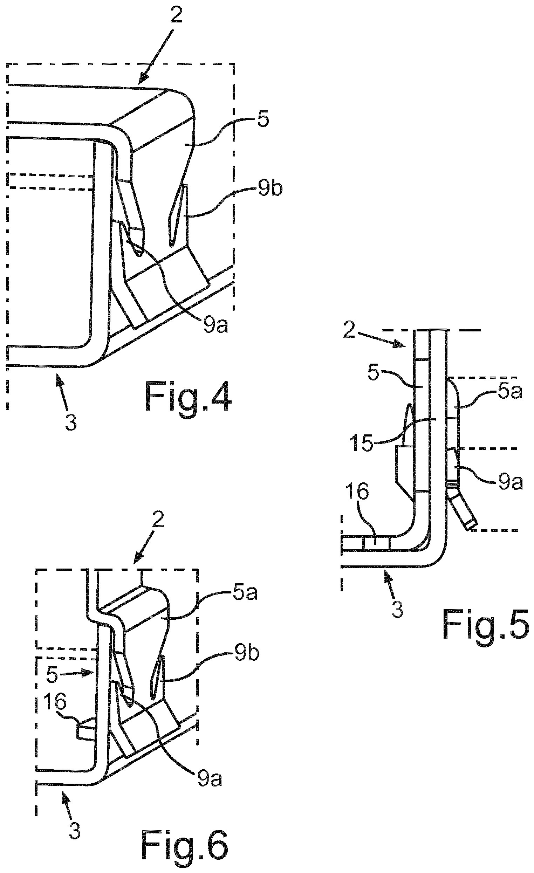

Wie zu erkennen ist, ist bei dieser Ausgestaltung vorgesehen, dass jeder vertikale Schenkel 5 bzw. 6 zumindest zwei integrale Befestigungselemente aufweist. Dies ist gemäß dem Schenkel 5 in der Darstellung in Fig. 4 zu erkennen. Dort sind zwei Befestigungselemente 9a und 9b vorhanden. Diese integral mit dem Schenkel 5 ausgebildeten Befestigungselemente 9a und 9b sind hier über die gesamte Wandstärke des Schenkels 5 mit entsprechender Dicke ausgebildet und durch Materialausstanzung bzw. Ausschneiden bzw. Ausfräsen aus der Wand des Schenkels 5 erzeugt. Darüber hinaus sind sie leicht nach innen geneigt und durch ein entsprechendes Biegen mit einer entsprechenden Orientierung versehen.

Der verkrallte Zustand der Befestigungselemente 9a und 9b mit dem Bauteil 3 sowie der am Schenkel 6 analog ausgebildeten weiteren zwei Befestigungselemente 10a und 10b ist in Fig. 3 zu erkennen bzw. angedeutet.

In Fig. 5 ist in einer Frontansicht ein Teilausschnitt eines weiteren, von der Erfindung nicht erfassten Ausführungsbeispiels einer Anordnung 1 gezeigt. Im Unterschied zur Ausgestaltung gemäß Fig. 3 und 4 ist hier vorgesehen, dass die Schenkel 5 und 6 zumindest bereichsweise über ihre Höhe doppelwandig ausgebildet sind. Dabei erstreckt sich ein nach außen verlaufender Schenkelabschnitt 5a, der einstückig an dem Basisschenkel 5 angeordnet ist, nach außen. Dieser Schenkelabschnitt 5a verläuft beabstandet und zumindest bereichsweise parallel zum Basisschenkel 5. Wie in der Darstellung gemäß Fig. 5 zu erkennen ist, ist im zusammengefügten Zustand des Trägerelements 2 mit dem weiteren Bauteil 3 der Schenkelabschnitt 5a durch eine Aussparung in dem vertikalen Schenkel 15 des Bauteils 3 hintergreifend eingeführt. Der Schenkel 15 wird somit von beiden Seiten her mit einerseits dem Basisschenkel 5 und andererseits dem Schenkelabschnitt 5a kontaktiert.

Darüber hinaus ist in Fig. 5 auch zu erkennen, dass der Basisschenkel 5 an seinem hinteren Ende einen Aufstand 16 aufweist, der auch als horizontal verlaufender Schenkel oder Steg bezeichnet werden kann. Im zusammengesetzten Zustand gemäß der Darstellung in Fig. 5 sitzt dieser innenseitig auf dem horizontalen Schenkel des Bauteils 3 auf.

In Fig. 6 ist in einer perspektivischen Darstellung von außen die Anordnung gemäß Fig. 5 im Teilausschnitt gezeigt.

Es kann vorgesehen sein, dass die Materialien des Trägerelements 2 und des weiteren Bauteils 3 gleich sind oder aber auch unterschiedlich sind. Es kann insgesamt vorgesehen sein, dass das Trägerelement 2 aus Metall ist und das weitere Bauteil 3 ebenfalls aus Metall oder beispielsweise aus Kunststoff ist.

### Bezugszeichenliste

- 1: Anordnung
- 2: Trägerelement
- 3: Bauteil
- 4: U-förmiges Querschnittprofil
- 5, 6: Schenkel
- 5a: Schenkelabschnitt
- 7, 8: Innenseiten
- 9, 9a, 9b: Befestigungselemente
- 10, 10a, 10b: Befestigungselemente
- 11: offenes Ende
- 12: Innenbereich
- 13, 14: Außenseiten des Bauteils
- 15: Schenkel des Bauteils
- 16: Aufstand

## Patentansprüche

1. Trägerelement (2) für ein Hausgerät, welches zumindest abschnittsweise ein U-förmiges Querschnittprofil (4) aufweist, wobei im U-förmigen Querschnittprofil (4) an gegenüberliegenden Schenkeln (5, 5a, 6) des Trägerelements (2) integral Befestigungselemente (9, 9a, 9b, 10, 10a, 10b) zum Befestigen eines mit dem Trägerelement (2) zu verbindenden weiteren Bauteils (3) ausgebildet sind, wobei die Befestigungselemente (9, 9a, 9b, 10, 10a, 10b) im unverbundenen Zustand des Trägerelements (2) mit dem Bauteil (3) schräg von den Schenkeln (5, 5a, 6) abstehend orientiert sind, **dadurch gekennzeichnet, dass** die Befestigungselemente (9, 10) im unverbundenen Zustand des Trägerelements (2) mit dem Bauteil (3) schräg nach unten in die Richtung eines im Querschnitt offenen Endes des Trägerelements (2) orientiert und ausgebildet sind, beim Einschieben des Bauteils (3) in das Trägerelement (2) nach oben umgebogen zu werden, so dass die Befestigungselemente (9, 10) im verbundenen Zustand des Trägerelements (2) mit dem Bauteil (3) von einer Innenseite (7, 8) abstehend und schräg nach oben und somit abgewandt vom offenen Ende (11) des Trägerelements (2) orientiert sind.

2. Trägerelement (2) nach Anspruch 1, **dadurch gekennzeichnet, dass** die Befestigungselemente (9, 9a, 9b, 10, 10a, 10b) funktionell als Einkrallelemente ausgebildet sind.

3. Trägerelement (2) nach Anspruch 1 oder 2, **dadurch gekennzeichnet, dass** die Befestigungselemente (9, 9a, 9b, 10, 10a, 10b) spitzig ausgebildet sind.

4. Trägerelement (2) nach einem der vorhergehenden Ansprüche, **dadurch gekennzeichnet, dass** die Befestigungselemente (9, 10) stiftartig ausgebildet sind.

5. Trägerelement (2) nach einem der vorhergehenden Ansprüche, **dadurch gekennzeichnet, dass** es aus Metall ausgebildet ist.

6. Trägerelement (2) nach einem der vorhergehenden Ansprüche, **dadurch gekennzeichnet, dass** die Befestigungselemente (9, 10) an den Innenseiten (7, 8) der Schenkel (5, 6) angeordnet sind.

7. Trägerelement nach einem der Ansprüche 1 bis 5, **dadurch gekennzeichnet, dass** die Befestigungselemente (9a, 9b, 10a, 10b) in der Wand der Schenkel (5a) ausgebildet sind.

8. Anordnung (1) mit einem Trägerelement (2) nach einem der vorhergehenden Ansprüche, und einem weiteren Bauteil (3), welches im zusammengefügten Zustand des Trägerelements (2) mit dem Bauteil (3) sich zumindest teilweise in das Innere (12) des U-förmigen Querschnittprofil (4) erstreckt und durch die an einer Außenseite (13, 14) des Bauteils (3) eingreifenden Befestigungselemente (9, 10) mit dem Trägerelement (2) positionsfixiert ist.

9. Anordnung (1) nach Anspruch 8, **dadurch gekennzeichnet, dass** das Bauteil (3) im Querschnitt u-förmig ist.

10. Hausgerät, insbesondere zur Zubereitung von Lebensmitteln, mit einer Anordnung (1) nach Anspruch 8 oder 9.

11. Verfahren zur Montage einer Anordnung (1) mit einem Trägerelement (2) nach einem der vorhergehenden Ansprüche 1 bis 7 und einem weiteren Bauteil (3), bei welchem das Trägerelement (2) mit dem weiteren Bauteil (3) verbunden wird, wobei bei einem Einschieben des Bauteils (3) in das Trägerelement (1) die in ihrer Ausgangsstellung in Richtung des im Querschnitt offenen Endes orientierten Befestigungselemente (9, 10) nach oben gebogen werden und im verbundenen Zustand des Trägerelements (2) mit dem Bauteil (3) von den Innenseiten (7, 8) abstehend und schräg nach oben und somit abgewandt von dem offenen Ende des Trägerelements (2) orientiert werden.

## Claims

1. Support element (2) for a domestic appliance, which has a U-shaped cross-sectional profile (4) at least in sections, wherein fastening elements (9, 9a, 9b, 10, 10a, 10b) for fastening a further component (3) to be connected to the support element (2) are embodied integrally in the U-shaped cross-sectional profile (4) on opposing limbs (5, 5a, 6) of the support element (2), wherein in the state in which the support element (2) is not connected to the component (3) the fastening elements (9, 9a, 9b, 10, 10a, 10b) are oriented to project obliquely from the limbs (5, 5a, 6), **characterised in that** in the state in which the support element (2) is not connected to the component (3) the fastening elements (9, 10) are oriented obliquely downward in the direction of an end, which is open in the cross-section, of the support element (2) and upon insertion of the component (3) into the support element (2) are embodied to be bent upward so that in the state in which the support element (2) is connected to the component (3) the fastening elements (9, 10) are oriented to project from an interior (7, 8) and obliquely upward and thus facing away from the open end (11) of the support element (2).

2. Support element (2) according to claim 1, **characterised in that** the fastening elements (9, 9a, 9b, 10, 10a, 10b) are embodied functionally as cling-on elements.

3. Support element (2) according to claim 1 or 2, **characterised in that** the fastening elements (9, 9a, 9b, 10, 10a, 10b) are embodied to be pointed.

4. Support element (2) according to one of the preceding claims, **characterised in that** the fastening elements (9, 10) are embodied to be pin-shaped.

5. Support element (2) according to one of the preceding claims, **characterised in that** it is embodied from metal.

6. Support element (2) according to one of the preceding claims, **characterised in that** the fastening elements (9, 10) are arranged on the interiors (7, 8) of the limbs (5, 6).

7. Support element according to one of claims 1 to 5, **characterised in that** the fastening elements (9a, 9b, 10a, 10b) are embodied in the wall of the limbs (5a).

8. Arrangement (1) with a support element (2) according to one of the preceding claims, and a further component (3), which in the state in which the support element (2) is joined to the component (3) extends at least partially into the interior (12) of the U-shaped cross-sectional profile (4) and is fixed in position with the support element (2) by the fastening elements (9, 10) engaging on an exterior (13, 14) of the component (3).

9. Arrangement (1) according to claim 8, **characterised in that** the component (3) has a U-shaped cross-section.

10. Domestic appliance, in particular for preparing food, having an arrangement (1) according to claim 8 or 9.

11. Method for assembling an arrangement (1) with a support element (2) according to one of the preceding claims 1 to 7 and a further component (3), in which the support element (2) is connected to the further component (3), wherein upon insertion of the component (3) into the support element (1), in their starting position the fastening elements (9, 10) oriented in the direction of the end, which is open in the cross-section, are bent upward and in the state in which the support element (2) is connected to the component (3) are oriented to project from the interiors (7, 8) and obliquely upward and thus facing away from the open end of the support element (2).

## Revendications

1. Élément de support (2) pour un appareil ménager, lequel présente au moins par sections un profil de section transversale en forme de U (4), dans lequel des éléments de fixation intégraux (9, 9a, 9b, 10, 10a, 10b) servant à fixer un composant supplémentaire (3) à relier à l'élément de support (2) sont exécutés dans le profil de section en forme de U (4), sur des côtés opposés (5, 5a, 6) de l'élément de support (2), dans lequel les éléments de fixation (9, 9a, 9b, 10, 10a, 10b) sont, à l'état non relié de l'élément de support (2) avec le composant (3), orientés en biais à l'écart des côtés (5, 5a, 6), **caractérisé en ce que** les éléments de fixation (9, 10) sont, à l'état non relié de l'élément de support (2) avec le composant (3), orientés en biais vers le bas en direction d'une extrémité de l'élément de support (2) ouverte en section, et exécutés afin d'être recourbés vers le haut lors de l'insertion du composant (3) dans l'élément de support (2), de sorte que les éléments de fixation (9, 10) sont, à l'état relié de l'élément de support (2) avec le composant (3), orientés à l'écart d'une face intérieure (7, 8) et en biais vers le haut et, dès lors, détournés de l'extrémité ouverte (11) de l'élément de support (2).

2. Élément de support (2) selon la revendication 1, **caractérisé en ce que** les éléments de fixation (9, 9a, 9b, 10, 10a, 10b) sont exécutés fonctionnellement sous la forme d'éléments d'accrochage.

3. Élément de support (2) selon la revendication 1 ou 2, **caractérisé en ce que** les éléments de fixation (9, 9a, 9b, 10, 10a, 10b) sont exécutés de façon pointue.

4. Élément de support (2) selon l'une des revendications précédentes, **caractérisé en ce que** les éléments de fixation (9, 10) sont exécutés en forme de broche.

5. Élément de support (2) selon l'une des revendications précédentes, **caractérisé en ce qu'**il est exécuté en métal.

6. Élément de support (2) selon l'une des revendications précédentes, **caractérisé en ce que** les éléments de fixation (9, 10) sont disposés sur les faces intérieures (7, 8) des côtés (5, 6).

7. Élément de support selon l'une des revendications précédentes 1 à 5, **caractérisé en ce que** les éléments de fixation (9a, 9b, 10a, 10b) sont exécutés dans la paroi des côtés (5a).

8. Dispositif (1) avec un élément de support (2) selon l'une des revendications précédentes, et un composant supplémentaire (3), lequel s'étend à l'état assemblé de l'élément de support (2) avec le composant (3) au moins partiellement à l'intérieur (12) du profil de section transversale en forme de U (4) et est fixé en position avec l'élément de support (2) par les éléments de fixation (9, 10) s'engageant sur une face intérieure (13, 14) du composant (3).

9. Dispositif (1) selon la revendication 8, **caractérisé en ce que** le composant (3) présente une section en forme de u.

10. Appareil ménager, servant en particulier à la préparation de denrées alimentaires, avec un dispositif (1) selon la revendication 8 ou 9.

11. Procédé de montage d'un dispositif (1) avec un élément de support (2) selon l'une des revendications précédentes 1 à 7 et un composant supplémentaire (3), l'élément de support (2) étant relié au composant supplémentaire (3), dans lequel lors d'une insertion du composant (3) dans l'élément de support (1), les éléments de fixation (9, 10) orientés dans leur position de départ vers l'extrémité ouverte en section sont recourbés vers le haut et sont, à l'état relié de l'élément de support (2) avec le composant (3), orientés à l'écart des faces intérieures (7, 8) et en biais vers le haut et, dès lors, détournés de l'extrémité ouverte de l'élément de support (2).
